**Europäisches Patentamt**

**European Patent Office**

**Office européen des brevets**

(19)

(11) Numéro de publication : **0 315 506 B1**

(12)

# FASCICULE DE BREVET EUROPEEN

(45) Date de publication du fascicule du brevet :
**27.11.91 Bulletin 91/48**

(51) Int. Cl.$^5$ : **B29C 53/84, B29D 23/22**

(21) Numéro de dépôt : **88402697.2**

(22) Date de dépôt : **26.10.88**

(54) **Procédé et machine de fabrication de pièces tubulaires à partir d'au moins une bande de matière souple, et pièces tubulaires ainsi obtenues.**

(30) Priorité : **03.11.87 FR 8715229**

(43) Date de publication de la demande :
**10.05.89 Bulletin 89/19**

(45) Mention de la délivrance du brevet :
**27.11.91 Bulletin 91/48**

(84) Etats contractants désignés :
**BE CH DE ES GB IT LI LU NL SE**

(56) Documents cités :
**EP-A- 0 233 439**
**WO-A-85/03906**
**FR-A- 1 359 169**
**FR-A- 2 107 457**
**FR-A- 2 125 127**
**GB-A- 897 940**
**US-A- 3 782 889**
**US-A- 4 078 957**

(56) Documents cités :
**PATENT ABSTRACTS OF JAPAN, vol. 10, no. 176 (M-491)[2232], 20 juin 1986, page 151 M 491; & JP-A-61 027 238 (HODA SHIKO K.K.) 06-02-1986**

(73) Titulaire : **AEROSPATIALE SOCIETE NATIONALE INDUSTRIELLE Société Anonyme dite:**
**37, Boulevard de Montmorency**
**F-75016 Paris (FR)**

(72) Inventeur : **Lecourt, Guy**
**20 rue des Caves**
**F-91430 Vauhallan (FR)**
Inventeur : **Riou, Jacques**
**25, rue du Bois de Verrières**
**F-91370 Verrières le Buisson (FR)**

(74) Mandataire : **Bonnetat, Christian et al**
**CABINET BONNETAT 23, Rue de Léningrad**
**F-75008 Paris (FR)**

EP 0 315 506 B1

## Description

La présente invention concerne un procédé de fabrication de pièces tubulaires, ainsi qu'une machine pour la mise en oeuvre dudit procédé.

Dans le cadre de l'invention, les pièces tubulaires sont réalisées, de façon générale, à partir d'une armature résistante liée au moins en surface à un produit polymérisable. De telles pièces peuvent être utilisées pour le conditionnement de liquides ou de gaz sous pression ou le transfert 'de fluides ou comme support mécanique, ou comme emballages de projectiles ou tubes de lancement de missiles, notamment.

Il est connu de réaliser de telles pièces tubulaires à partir de fibres, par exemple des fibres de verre liées par une résine polymérisable, qui sont soit enroulées de façon jointive autour d'un mandrin, soit disposées jointivement l'une à côté de l'autre autour d'un mandrin en s'étendant parallèlement audit mandrin, ou par enroulement droit d'une feuille de telle matière sur elle-même autour d'un mandrin. Cependant, aucune de ces solutions connues ne s'est révélée entièrement satisfaisante en ce qui concerne la production de série. En outre, il est difficile, sinon impossible, de mettre en oeuvre de tels procédés en continu.

Par ailleurs, par le document EP-A-0233439, il est connu de réaliser de telles pièces tubulaires à partir de bandes constituées d'une armature résistante liée à un produit polymérisable, une couche de support, qui n'adhère pas au mandrin, étant prévue entre ledit mandrin et lesdites bandes.

De plus, on connaît un procédé de fabrication d'un tube en carton ou matière analogue, à partir d'au moins une bande de carton, dans lequel la ou les bandes de carton sont enroulées en hélice autour d'un mandrin, et la ou les bandes enroulées autour du mandrin sont entraînées parallèlement à l'axe longitudinal du mandrin à l'aide de moyens d'entraînement par friction.

Un tel procédé permet de réaliser en continu, de façon simple et fiable, des tubes en carton ayant une bonne résistance au flambage. Cependant, un tel procédé ne pourrait pas être utilisé tel quel pour réaliser des pièces tubulaires à partir de bandes constituées d'une armature résistante liée au moins en surface à un produit polymérisable, du fait même de la présence dudit produit polymérisable.

La présente invention a donc pour objet d'adapter les procédés connus à la réalisation industrielle de pièces tubulaires, telles que définies ci-dessus.

A cet effet, le procédé de fabrication d'une pièce tubulaire à partir d'au moins une bande de matière souple, dans lequel la ou lesdites bandes sont enroulées en hélice autour d'un mandrin, et la ou lesdites bandes enroulées autour du mandrin sont entraînées parallèlement à l'axe longitudinal du mandrin à l'aide de moyens d'entraînement par friction, la ou lesdites bandes étant constituées d'une armature résistante liée au moins en surface à un produit polymérisable, et une couche de support, qui n'adhère pas au mandrin, étant prévue entre ledit mandrin et la ou lesdites bandes, est caractérisé en ce que, dans la zone desdits moyens d'entraînement par friction, la température du produit polymérisable est réglée de façon, d'une part, à éviter le transfert dudit produit polymérisable sur lesdits moyens d'entraînement et, d'autre part, à permettre le compactage de ladite pièce par lesdits moyens.

Ainsi, il est possible de réaliser, en continu, des pièces tubulaires, à partir d'au moins une bande constituée d'une armature résistante liée au moins en surface à un produit polymérisable, pièces qui possèdent de bonnes propriétés mécaniques, sont légères et peu coûteuses.

En particulier, dans le cas où une résine époxy est utilisée comme produit polymérisable, la température dans ladite zone est maintenue entre 80 et 90°C.

Avantageusement, la température du mandrin est réglée de façon à éviter une dilatation thermique excessive de celui-ci. Pour un mandrin en acier, il est souhaitable de maintenir la température du mandrin inférieure à 80°C.

La présente invention concerne également une machine de fabrication d'une pièce tubulaire à partir d'au moins une bande de matière souple, pour la mise en oeuvre du procédé ci-dessus, du type comportant un mandrin autour duquel la ou lesdites bandes sont susceptibles d'être enroulées en hélice, et des moyens d'entraînement par friction de la ou desdites bandes enroulées autour du mandrin, parallèlement à l'axe longitudinal du mandrin, et remarquable, selon l'invention, en ce que, la ou lesdites bandes étant constituées d'une armature résistante liée au moins en surface à un produit polymérisable, des moyens de régulation thermique sont prévus dans la zone desdits moyens d'entraînement.

Avantageusement, lesdits moyens de régulation thermique créent une pluralité de jets d'air chaud.

Selon une autre caractéristique de l'invention, la machine comprend, en aval desdits moyens d'entraînement, des moyens pour polymériser ledit produit.

En particulier, lesdits moyens de polymérisation sont constitués par un four présentant au moins deux zones de chauffe.

Selon encore une autre caractéristique de l'invention, ledit mandrin présente une double enveloppe de circulation d'un fluide de régulation thermique.

Par ailleurs, lesdits moyens d'entraînement peuvent être constitués par une courroie ou une succession de courroies sans fin.

Selon encore une autre caractéristique de l'invention, entre lesdits moyens d'entraînement et lesdits moyens de polymérisation, sont prévus des moyens permettant d'enrouler en hélice sur ladite pièce un film de maintien de celle-ci pendant la polymérisation.

Les figures du dessin annexé feront bien comprendre comment l'invention peut être réalisée.

La figure 1 est une vue schématique de la machine de fabrication d'une pièce tubulaire selon l'invention.

La figure 2 est une vue en coupe transversale agrandie du mandrin de la machine de la figure 1.

Il convient tout d'abord de noter que la machine 1 représentée sur le dessin est adaptée, à titre d'exemple, à la fabrication d'une pièce tubulaire à partir de plusieurs bandes (trois dans cet exemple) de tissu de verre imprégné de résine époxy, de deux bandes de papier résistant ou de carton et d'une bande de film séparateur en polypropylène. Les bandes de carton, au contact du mandrin fixe, permettent la translation des autres bandes. Le film séparateur isole la dernière bande de carton de la première bande de tissu de verre préimprégné afin que le tissu n'adhère pas au carton.

Les différentes bandes de matière, à partir desquelles est réalisée la pièce tubulaire, sont susceptibles d'être enroulées autour d'un mandrin 2 fixé dans un porte-mandrin 3. Pour cela, des bobines de carton 4, 5, une bobine de film séparateur 6 et des bobines de tissu préimprégné de résine 7, 8, 9 sont montées sur un dévidoir 10, lequel présente, par rapport à l'axe longitudinal X-X' du mandrin 2, un angle d'attaque, déterminé en fonction du diamètre du mandrin et de la largeur des bandes, permettant l'obtention de spires jointives. Par ailleurs, les bobines 4-9 sont décalées l'une par rapport à l'autre sur le dévidoir 10 pour obtenir un certain recouvrement d'une bande par rapport à une autre.

Une courroie sans fin 11, montée sur deux poulies motrices 12a, 12b, permet d'entraîner les bandes 4a-9a, enroulées autour du mandrin 2, parallèlement à l'axe longitudinal X-X' du mandrin dans la direction de la flèche F. De plus, des moyens de régulation thermique 13, créant par exemple des jets d'air chaud, sont prévus dans la zone de la courroie 11. On peut ainsi régler la température du produit polymérisable (résine) imprégnant les bandes de tissu de verre de façon, d'une part, à éviter le transfert dudit produit polymérisable sur la courroie 11 et, d'autre part, à permettre le compactage de la pièce par ladite courroie. Dans le cas particulier d'une résine époxy, la température dans ladite zone est maintenue entre 80 et 90°C.

En aval de la courroie d'entraînement 11, est prévu un four de polymérisation 14, étant bien entendu que la polymérisation pourrait être obtenue par d'autres moyens, notamment un rayonnement ultraviolet.

Le four de polymérisation 14 est avantageusement réalisé de façon à présenter au moins deux zones de chauffe afin d'effectuer la polymérisation de la résine sans choc thermique. Dans le cas d'une résine époxy, pour que le produit soit porté à 110-120°C dans une première zone et 130-140°C dans la seconde zone, les températures affichées de régulation sont respectivement de 220 et 270°C.

De plus, entre la courroie d'entraînement 11 et le four de polymérisation 14, un film 15a, par exemple identique au film séparateur 6a, déroulé d'une bobine 15 est enroulé en hélice sur la pièce tubulaire de façon à maintenir celle-ci pendant la polymérisation en évitant ainsi une "dispersion" des diamètres.

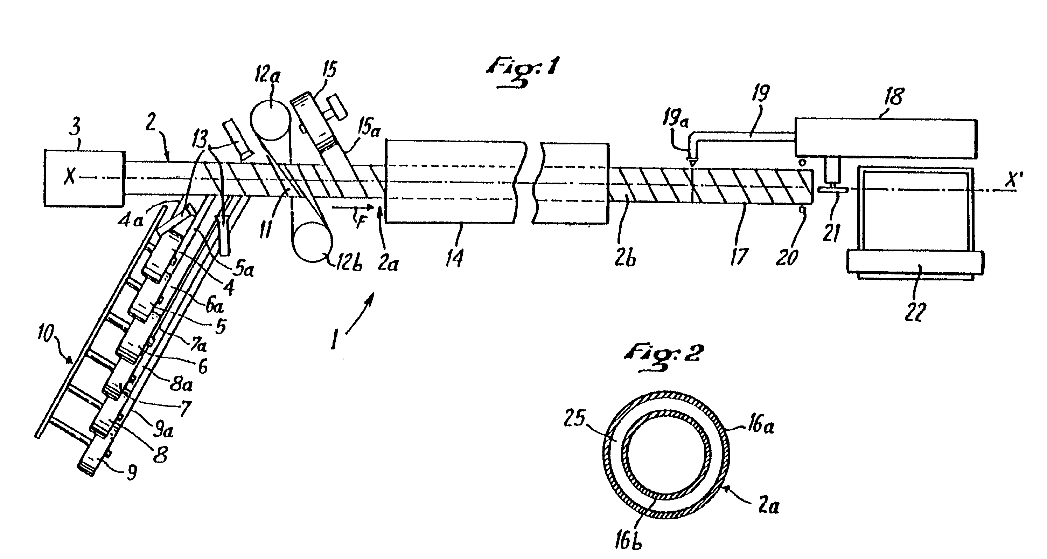

Pour permettre, par ailleurs, une régulation thermique du mandrin de façon à éviter une dilatation excessive de celui-ci, une première partie 2a du mandrin 2, présente une double enveloppe constituée de parois externe 16a et interne 16b définissant un espace 25 de circulation d'un fluide de régulation thermique (figure 2). Dans le cas où cette partie 2a du mandrin est réalisée en acier, la température de celle-ci doit être maintenue inférieure à 80°C. La partie 2b du mandrin 2 au-delà de la sortie du four 14 peut être réalisée en un alliage léger, d'aluminium par exemple.

Une fois la polymérisation terminée, la pièce tubulaire peut être débitée en tronçons 17. Pour cela, il est souhaitable de mettre en oeuvre un procédé de coupe sans contact : coupe par jet fluide, faisceau laser, faisceau d'électrons, etc...

Comme dans l'exemple représenté, on peut utiliser un faisceau laser (par exemple à gaz carbonique). Sur l'appareil à laser 18, est monté un tube télescopique 19 pouvant se déplacer parallèlement à l'axe longitudinal X-X' du mandrin en synchronisme avec le déplacement selon la flèche F de la pièce tubulaire. Le faisceau laser issu de l'extrémité 19a du tube 19 peut ainsi découper, selon un cercle, la pièce tubulaire. Une cellule optique réglable 20 permet de commander le déplacement du tube 19.

Un extracteur 21 reçoit le tronçon 17 une fois débité et l'éjecte sur un réceptacle 22. Les bandes de carton, le film séparateur et le film de maintien peuvent ensuite être retirés.

Il est bien entendu que les nombres des bandes des différentes matières utilisées dans cet exemple ne sont pas limités à ceux indiqués. En outre, à la place d'une résine époxy, on peut utiliser une autre résine polymérisable, comme, par exemple, une résine polyester. De même, à la place du tissu de verre, on peut utiliser une autre armature résistante, comme, par exemple, une ou des bandes métalliques enduites de colle polymérisable.

Par ailleurs, les propriétés de la pièce tubulaire peuvent être améliorées en y ajoutant une feuille métallisée pour une meilleure étanchéité et/ou un treillis de fils métalliques de protection contre les agressions électromagnétiques et/ou des renforts aux endroits particulièrement sollicités.

## Revendications

1. Procédé de fabrication d'une pièce tubulaire à partir d'au moins une bande de matière souple, dans lequel la ou lesdites bandes sont enroulées en hélice autour d'un mandrin, et la ou lesdites bandes enroulées autour du mandrin sont entraînées parallèlement à l'axe longitudinal du mandrin à l'aide de moyens d'entraînement par friction, la ou lesdites bandes (7a-9a) étant constituées d'une armature résistante liée au moins en surface à un produit polymérisable et une couche de support (4a-6a), qui n'adhère pas au mandrin (2), étant prévue entre ledit mandrin (2) et la ou lesdites bandes (7a-9a), caractérisé en ce que, dans la sone desdits moyens d'entraînement par friction (11), la température du produit polymérisable est réglée de façon, d'une part, à éviter le transfert dudit produit polymérisable sur lesdits moyens d'entraînement et, d'autre part, à permettre le compactage de ladite pièce par lesdits moyens.

2. Procédé selon la revendication 1, caractérisé en ce que, dans le cas où une résine époxy est utilisée comme produit polymérisable, la température dans ladite sone est maintenue entre 80 et 90°C.

3. Procédé selon la revendication 1 ou la revendication 2, caractérisé en ce que la température du mandrin (2) est réglée de façon à éviter une dilatation thermique excessive de celui-ci.

4. Procédé selon la revendication 3, caractérisé en ce que, pour un mandrin en acier, la température de celui-ci est maintenue inférieure à 80°C.

5. Machine de fabrication d'une pièce tubulaire à partir d'au moins une bande de matière souple, pour la mise en oeuvre du procédé selon l'une quelconque des revendications 1 à 4, du type comportant un mandrin autour duquel la ou lesdites bandes sont susceptibles d'être enroulées en hélice, et des moyens d'entraînement par friction de la ou desdites bandes enroulées autour du mandrin, parallèlement à l'axe longitudinal du mandrin, caractérisée en ce que, la ou lesdites bandes (7a-9a) étant constituées d'une armature résistante liée au moins en surface à un produit polymérisable, des moyens de régulation thermique (13) sont prévus dans la zone desdits moyens d'entraînement (11).

6. Machine selon la revendication 5, caractérisée en ce que lesdits moyens de régulation thermique (13) créent une pluralité de jets d'air chaud.

7. Machine selon la revendication 5 ou la revendication 6, caractérisée en ce qu'elle comprend, en aval desdits moyens d'entraînement (11), des moyens (14) pour polymériser ledit produit.

8. Machine selon la revendication 7, caractérisée en ce que lesdits moyens de polymérisation sont constitués par un four (14) présentant au moins deux zones de chauffe.

9. Machine selon l'une quelconque des revendications 5 à 8, caractérisée en ce que ledit mandrin (2) présente une double enveloppe (16a, 16b) de circulation d'un fluide de régulation thermique.

10. Machine selon l'une quelconque des revendications 5 à 9, caractérisée en ce que lesdits moyens d'entrainement sont constitués par une courroie sans fin (11) qui engendre une couche de support (4a-6a).

11. Machine selon l'une quelconque des revendications 7 à 10, caractérisée en ce que, entre lesdits moyens d'entrainement (11) et lesdits moyens de polyérisation (14), sont prévus des moyens (15) permettant d'enrouler en hélice sur ladite pièce un film (15a) de maintien de celle-ci pendant la polymérisation.

## Patentansprüche

1. Verfahren zum Herstellen eines Rohr- oder Röhrenstücks ausgehend von zumindest einem Streifen biegsamen Materials, bei dem der oder die Streifen schraubenförmig um einen Kern oder Dorn gewickelt sind und der oder die um einen Kern gewickelten Streifen parallel zur Längsachse des Kerns mittels eines Reibungsantriebs angetrieben wird bzw. werden, wobei der oder die Streifen (7a-9a) gebildet sind aus einer zumindest auf der Oberfläche mit einem polymerisierbarem Produkt verbundenen widerstandsfähigen Bewehrung oder Umhüllung, und wobei eine Trägerschicht (4a-6a) die nicht am Kern (2) haftet zwischen dem Kern (2) und dem oder den Streifen (7a bzw. 9a) liegt, dadurch **gekennzeichnet,** daß in dem Bereich der Reibungsantriebseinrichtung (11) die Temperatur des polymerisierbaren Produkts derart geregelt wird, daß einerseits die Übertragung des polymerisierbaren Produkts auf die Antriebseinrichtung vermieden und andererseits die Verdichtung des Stücks durch die Einrichtung ermöglicht wird.

2. Verfahren nach Anspruch 1, dadurch **gekennzeichnet,** daß für den Fall, daß als polymerisierbares Produkt ein Epoxyharz verwendet wird, die Temperatur im angesprochenen Bereich zwischen 80 und 90°C gehalten wird.

3. Verfahren nach einem der vorhergehenden Ansprüche 1 oder 2, dadurch **gekennzeichnet,** daß die Temperatur des Kerns (2) derart geregelt wird, daß dessen übermäßige Wärmedehnung vermieden wird.

4. Verfahren nach Anspruch 3, dadurch **gekennzeichnet,** daß bei einem Kern aus Stahl dessen Temperatur unterhalb von 80°C gehalten wird.

5. Maschine zum Herstellen eines Rohr- oder Röhrenstücks ausgehend von zumindest einem Streifen biegsamen Materials zum Durchführen des Verfahrens nach einem der vorhergehenden Ansprüche 1 bis 4, die derart ausgeführt ist, daß sie einen Kern, um den der oder die Streifen schraubenförmig gewickelt werden können, und eine Einrichtung zum reibenden Antrieb des oder der um den Kern gewickelten Streifen parallel zur Längsachse des Kerns aufweist, dadurch **gekennzeichnet**, daß bei dem oder den Streifen (7a-9a), die gebildet sind aus einer zumindest auf der Oberfläche mit einem polymerisierbarem Produkt verbundenen widerstandsfähigen **Bewehrung** oder Umhüllung, Mittel zur Temperaturregelung (13) im Bereich der Antriebseinrichtung (11) vorgesehen sind.

6. Maschine nach Anspruch 5, dadurch **gekennzeichnet**, daß die Mittel zur Temperaturregelung (13) eine Anzahl von Warmluftstrahlen erzeugt.

7. Maschine nach einem der vorhergehenden Ansprüche 5 oder 6, dadurch **gekennzeichnet**, daß sie der Antriebseinrichtung (11) nachgeschaltet eine Einrichtung (14) zum Polymerisieren des Produkts aufweist.

8. Maschine nach Anspruch 7, dadurch **gekennzeichnet**, daß die Einrichtung zum Polymerisieren aus einem zumindest zwei Wärmezonen aufweisenden Ofen (14) gebildet ist.

9. Maschine nach einem der vorhergehenden Ansprüche 5 bis 8, dadurch **gekennzeichnet**, daß der Kern (2) einen Doppelmantel (16a, 16b) für den Flüssigkeitsumlauf der Wärmeregelung aufweist.

10. Maschine nach einem der vorhergehenden Ansprüche 5 bis 9, dadurch **gekennzeichnet**, daß die Antriebseinrichtung gebildet ist aus einem endlosen Treibriemen (11), von dem eine Trägerschicht (4a-6a) erzeugt wird.

11. Maschine nach einem der vorhergehenden Ansprüche 7 bis 10, dadurch **gekennzeichnet**, daß zwischen der Antriebseinrichtung (11) und der Einrichtung zum Polymerisieren (14) Mittel (15) vorgesehen sind, durch die auf das Stück eine dieses während der Polymerisierung haltende dünne Schicht (15a) schraubenförmig aufgewickelt werden kann.

## Claims

1. Process for manufacturing a tubular piece from at least one web of supple material, in which the or each web is helically wound around a mandrel, and the or each web wound around the mandrel is driven parallel to the longitudinal axis of the mandrel with the aid of frictional drive means, the or each web (7a-9a) being constituted by a resistant reinforcement bonded at least on the surface to a polymerizable product, and a support layer (4a-6a), which does not adhere to the mandrel (2), being provided between said mandrel (2) and the or each web (7a-9a),

characterized in that, in the zone of said frictional drive means (11), the temperature of the polymerizable product is adjusted so as, on the one hand, to avoid transfer of said polymerizable product on said drive means and, on the other hand, to allow compacting of said piece by said means.

2. Process according to claim 1, characterized in that, where an epoxy resin is used as polymerizable product, the temperature in said zone is maintained between 80 and 90°C.

3. Process according to claim 1 or claim 2, characterized in that the temperature of the mandrel (2) is adjusted so as to avoid an excessive thermal expansion thereof.

4. Process according to claim 3, characterized in that, for a steel mandrel, the temperature thereof is maintained at less than 80°C.

5. Machine for manufacturing a tubular piece from at least one web of supple material, for carrying out the process according to any one of claims 1 to 4, of the type comprising a mandrel around which the or each web is capable of being helically wound, and means for driving by friction the or each web wound around the mandrel, parallel to the longitudinal axis of the mandrel,

characterized in that, the or each web (7a-9a) being constituted by a resistant reinforcement bonded at least on the surface to a polymerizable product, heat regulation means (13) are provided in the zone of said drive means (11).

6. Machine according to claim 5, characterized in that said heat regulation means (13) create a plurality of jets of hot air.

7. Machine according to claim 5 or claim 6, characterized in that it comprises, downstream of said drive means (11), means (14) for polymerizing said product.

8. Machine according to claim 7, characterized in that said polymerization means are constituted by an oven (14) presenting at least two heating zones.

9. Machine according to any one of claims 5 to 8, characterized in that said mandrel (2) presents a double jacket (16a, 16b) for circulation of a heat regulating fluid.

10. Machine according to any one of claims 5 to 9, characterized in that said drive means are constituted by an endless belt (11) which generates a support layer (4a-6a).

11. Machine according to any one of claims 7 to 10, characterized in that, between said drive means (11) and said polymerization means (14), are provided means (15) for helically winding on said piece a film (15a) for retaining said piece during polymerization.

*Fig:1*

*Fig:2*